# EUROPEAN PATENT SPECIFICATION

(11) **EP 1 177 500 B1**
(45) Date of publication and mention of the grant of the patent: **07.07.2004**
(21) Application number: 00958987.0
(22) Date of filing: 29.08.2000
(51) Int. Cl.: G06F 11/00, G06F 11/20, H04L 29/06

(54) **SCALABLE SERVER ARCHITECTURE BASED ON ASYMMETRIC 3-WAY TCP**
AUF DREIFACH TCP BASIERTE SKALIERBARE SERVERARCHITEKTUR
ARCHITECTURE DE SERVEUR SCALAIRE FONDEE SUR UN PROTOCOLE TCP 3 VOIES ASYMETRIQUE

(30) Priority: 01.09.1999 KR 9936874
(43) Date of publication of application: 06.02.2002
(73) Proprietor: Netkingcall, Co., Ltd., Mapo-ku, Seoul 121-020 (KR)
(72) Inventor: KIM, Han-Gyoo, Seogang LG Apt., Mapo-ku, Seoul 121-140 (KR)
(74) Representative: Lorenz, Werner, Dr.-Ing.
(86) International application number: PCT/KR2000/000973
(87) International publication number: WO 2001/017153

(56) References cited:
- US-A- 5 513 314

## Description

### TECHNICAL FIELD

This invention relates to client-server network processing. More specifically, this invention relates to a server architecture based on asymmetric 3-way TCP.

### BACKGROUND ART

Computers on the Internet communicate with each other by sending packets according to a standard protocol suite including the TCP/IP (Transmission Control Protocol and Internet Protocol) suite.

As the usage of Internet increases, high-performance web servers or mail servers are desired that can accommodate ever-increasing service requests from many clients. Especially, what is desired is a scalable server system whose handling capacity can increase in proportion to the frequency of service requests from clients.

One way to implement such a scalable server system is to employ a high-performance single processor server. But, this is not an economically desirable solution because one must pay a stiff price for such a single-processor high-performance system. Another way is to employ multiple servers to distribute service requests from clients. However, adding servers does not necessarily translate to increased performance because the existing protocol limits handling of service requests to only those servers specified by the clients, thereby creating a bottleneck.

Therefore, there is a need for a scalable server architecture whose performance is proportional to the client's demand.

US-A-5 513 314 discloses a network file system comprising a client and a first and a second server system constituting a mirror server system.

### DISCLOSURE OF THE INVENTION

It is an object of the present invention to provide a scalable server system whose performance does not degrade with the increased frequency of a client's service requests.

Another object of the present invention is to provide a server system that can distribute service requests from a client over multiple processors to increase the performance.

The foregoing and other objects are accomplished by providing a server system according to claim 1. The front-end server receives a service request from the client and sends a service command necessary to process the service request to the back-end server. The back-end server executes the service command and sends the result back directly to the client in a pseudo TCP packet which would be recognized by the client as being sent by the front-end server. The pseudo TCP packet has the IP address and the port number of the front-end server to look like a packet sent by the front-end server.

### BRIEF DESCRIPTION OF THE DRAWINGS

FIG. 1 is an illustration of an asymmetric 3-way TCP (ATCP) scheme of the present invention.
FIG. 2 is a schematic diagram of the ATCP of the present invention.
FIG. 3 is a flowchart of a software routine run at the front-end server.
FIG. 4 is a flowchart of a software routine run at the back-end server.
FIG. 5 is a flowchart of a software routine run by the front-end server to send a service command the back-end server through an ATCP_command_back-end_server packet.
FIG. 6 is a flowchart of a software routine run at the back-end server upon receiving the ATCP_command_to_back-end_server packet from the front-end server.
FIG. 7 is a flowchart of a software routine run at the back-end server before sending an ATCP_service_reply packet to the client and an ATCP_ACK packet to the front-end server.
FIG. 8 is a flowchart of a software routine run at the front-end server upon receiving the ATCP_ACK packet from the back-end server.
FIG. 9 is a flowchart of a software routine run at the front-end server upon receiving an ACK packet from the client.
FIG. 10 is a flowchart of a software routine run at the back-end server upon receiving the ATCP_ACK packet from the front-end server.
FIG. 11 is a block diagram for a back-end server that assembles a pseudo TCP packet.
FIG. 12 is a state transition diagram of a state machine controlling the back-end server.

### MODE OF CARRYING OUT THE INVENTION

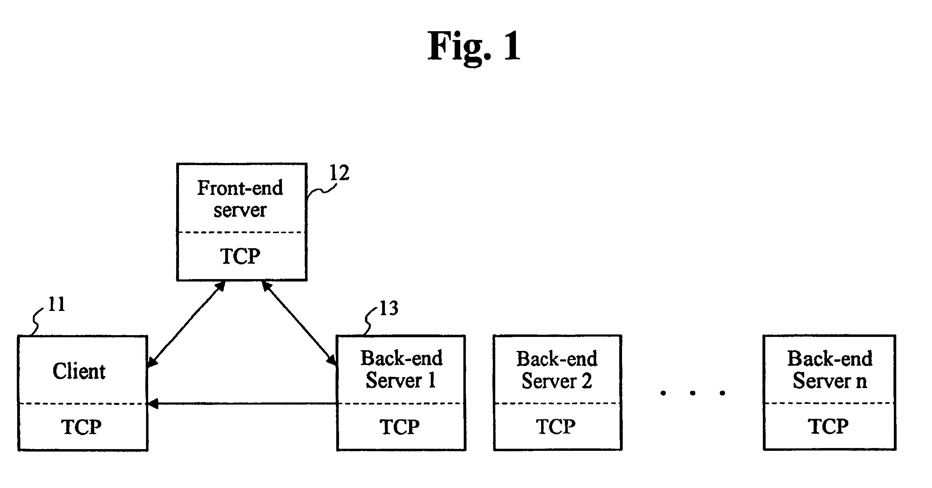

FIG. 1 illustrates the operations of a client-server system based on Asymmetric TCP (ATCP) of the present invention. The system has a client 11 communicating with a front-end server 12 and a back-end server 13. The operations may be summarized as follows:
(1) The client makes a service request to the front-end server through the socket of the front-end server whose TCP connection is specified by the client. Note that the client does not specify any connection with the back-end server and does not even know the presence of the back-end server.
(2) The front-end server relays the service request received from the client to the back-end servers together with the source/destination port numbers and source/destination IP addresses and the acknowledge number expected by the client and the sequence number of the TCP packet that would contain the result of the service request. The front-end server may simply relay the client's request to the back-end server or sends a specific command after decoding a request. If the front-end server directly handles the client's service request, the front-end server would send the result to the clients through a conventional TCP packet.
(3) The back-end server sends a TCP packet containing the service result to the client through the client's socket. Although the TCP packet is made by the back-end server, the packet is disguised as if it were sent by the front-end server by using the destination/source sockets specified by the client and the front-end server. For this reason, the TCP packet sent by the back-end server is referred to as a "pseudo TCP packet."
(4) The client sends a TCP packet responding to the service received to the front-end server and sends a further service request to the front-end server, if necessary.

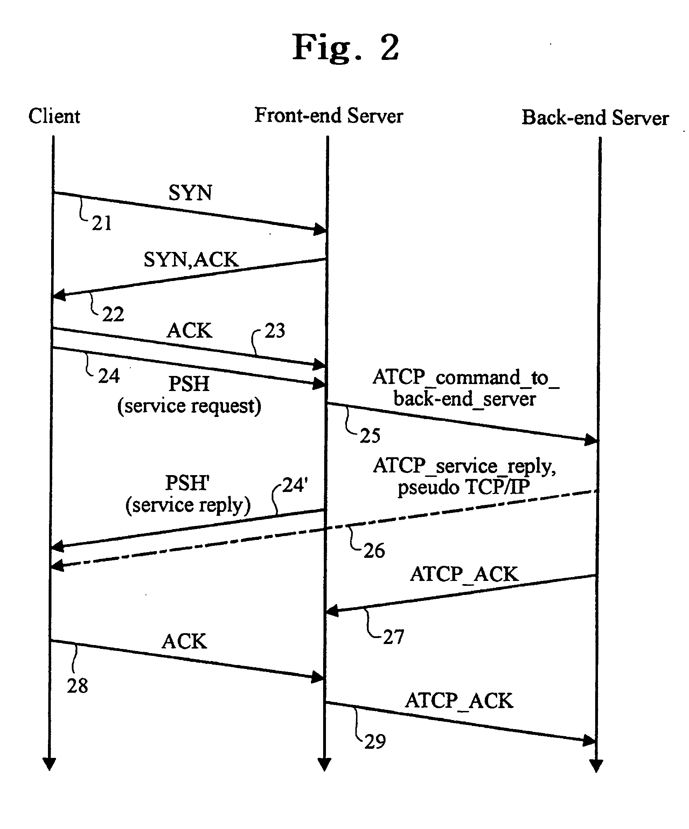

FIG. 2 shows a schematic diagram of the TCP and ATCP packets exchanged between the client, the front-end server, and the back-end server.
(a) SYN 21, SYN ACK 22, ACK 23 are conventional TCP packets for handshaking between the client and the front-end server to establish a TCP connection. PSH 24 is a conventional TCP packet containing a service request from the client to the front-end server.
(b) PSH' 24' is a conventional TCP packet that would have been generated by the front-end server to send the front-end server's reply to the service request. However, in the present invention, PSH' 24' is not generated. Instead, the front-end server relays the service request to the back-end server so that the reply to the service requests is handled by the back-end server. By using multiple back-end servers, the front-end server can distribute the processing among multiple processors, thereby enabling a high-performance server system.
(c) ATCP_command_to_back-end_server 25 of the present invention is not a conventional TCP packet, but an ATCP packet containing a service command from the front-end server to the back-end server, the source/destination IP addresses of the client requesting the service, the port number of the client, the acknowledgement number expected by the client, and the sequence number expected by the client.
(d) The back-end server, receiving receives a service command from the front-end server through ATCP_command_to_back-end_server 25, processes the command and sends the result directly to the client in ATCP_service_reply 26. For ATCP_service_reply 26 to be recognized by the client process through the client's TCP layer, the ATCP_service_reply packet must look as if it were sent by the front-end server. This is accomplished by making the destination port number of the ATCP packet 26 assigned the client's port number and the source port number of the ATCP packet assigned the front-end server's port number. The destination port number and the acknowledgement number of the ATCP_service_reply packet 26 are assigned the sequence number and the acknowledgement number received through the ATCP_command_to_back-end_server 25 packet.
(e) After sending ATCP_service_reply 26 to the client, the back-end server sends an acknowledgement to the front-end server through ATCP_ACK 27. Without this acknowledgement, the front-end server has no way of knowing whether the back-end server correctly has processed the command.
(f) The TCP layer of the front-end server sets the acknowledgement number expected from the client as the sequence number sent to the back-end server plus the size of data sent to the client by the back-end server.
(g) Receiving ATCP_service_reply 26, the client recognizes it as a packet received by the front-end server and sends an acknowledgement ACK 28, a conventional TCP packet containing an acknowledgement number, to the front-end server. The acknowledgement number would be equal or less than the acknowledgement number expected by the front-end server because the front-end server already updated the expected acknowledgement number in step (f). If the expected acknowledgement number had not been updated in step (f), a TCP packet having the response larger than the expected number would have been discarded.
(h) Receiving ACK 28, the ATCP of layer of the front-end server sends a response ATCP_ACK 29 if the acknowledgment number received is equal or less than the expected acknowledgement number.
(i) Receiving ATCP_ACK 29, the ATCP layer of the back-end server empties the buffer by the received amount. Since the front-end server and the back-end server of present invention cooperate each other with respect to the acknowledgement number without disturbing other TCP services, ATCP_ACK 29 is treated similar to a TCP packet.

The front-end server relays the TCP packet received from the client through the established connection between the client and the front-end server. Note, however, that the back-end server need not and does not establish a TCP connection with the client because the back-end server sends the result in a pseudo TCP packet that would look like a TCP packet sent from the front-end server. In fact, the client does not even know of the presence of the back-end servers.

The packets exchanged by the front-end server and back-end server need not be a TCP packet or of the same format as a TCP packet as long as the packets support a connection-oriented service.

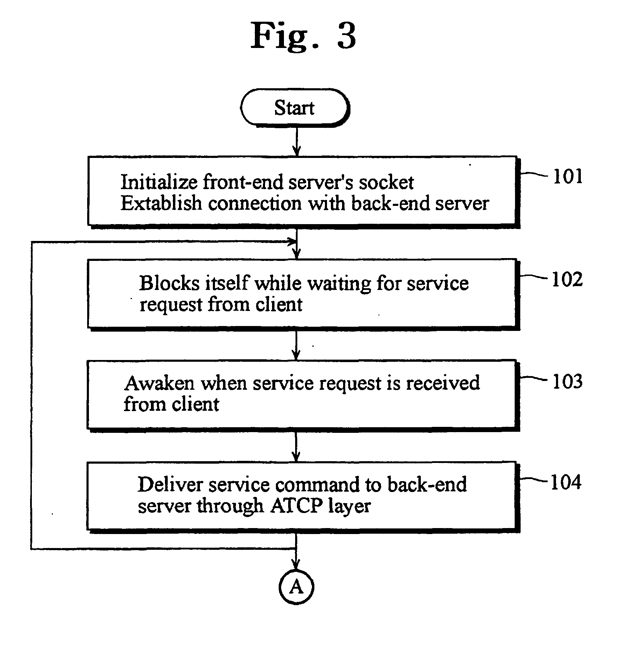

FIG. 3 is a flowchart of a software routine run at the front-end server. The process at the front-end server first initializes the socket connection with the back-end server (step 101), and blocks itself while waiting a service request from a client (step 102). When a service request is received from a client, the process at the front-end server is awakened, and the process delivers a service command to the back-end server through the ATCP layer. The process at the front-end server repeats steps 102-104. Processing point (A) represents the point in time when the process run at the front-end server sends a command to the back-end server through the ATCP layer.

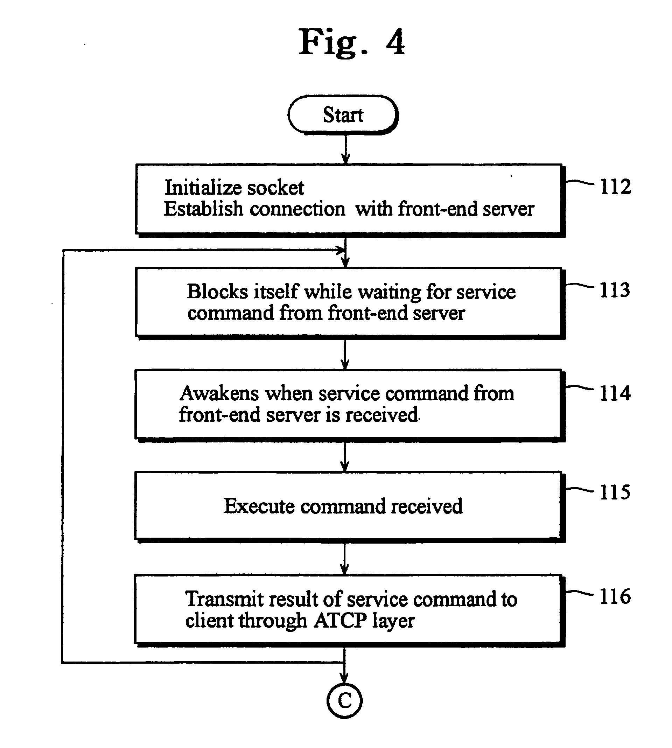

FIG. 4 is a flowchart of a software routine run at the back-end server. The process run at the back-end server first initializes the socket connection (step 112) and blocks itself while waiting for a command from the front-end server. (step 113). The process is awakened when ATCP_command_to-back-end_server 25, a pseudo TCP packet containing a command from the front-end server, is sent to the ATCP level of the back-end server (step 114).

Please note that there is no need for a TCP stack at the back-end server because the back-end server receives a special command from the front-end server rather than a full TCP packet.

After executing the command received from the front-end server (step 115), the process incorporates the service result into a pseudo TCP packet and send it to the client, not to the front-end server, and blocks itself waiting for a next command. The process at the back-end server repeats the above steps (steps 113-116). Processing point (C) represents the point in time when the command is delivered from the back-end server software to the ATCP level at the back-end server through the API such as a socket.

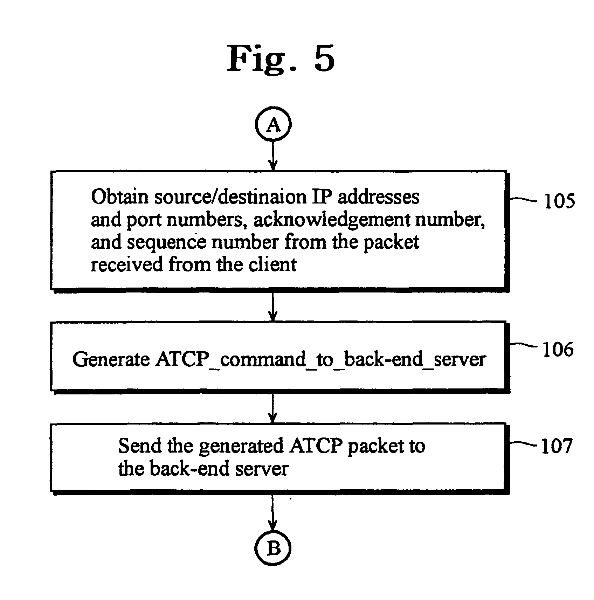

FIG. 5 is a flowchart of a software routine run at the front-end server after step (A). The process at the front-end server obtains the source/destination IP addresses of the client requesting the service, the source/destination port numbers, the acknowledgement number, and the sequence number (105), generates an ATCP packet (step 106), and sends it to the back-end server (step 107).

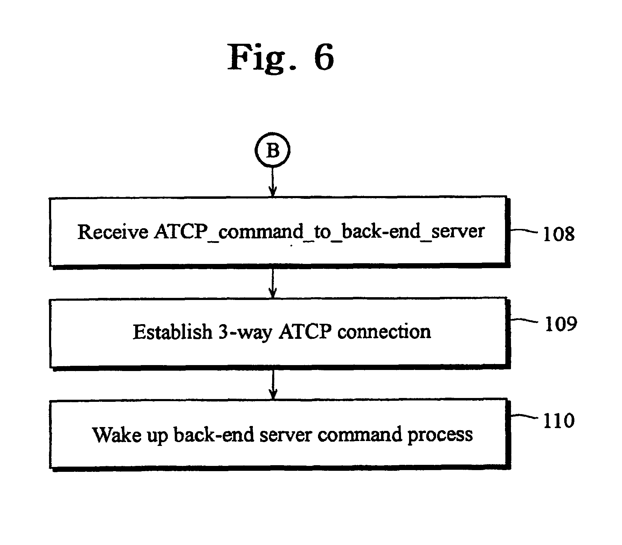

FIG. 6 is a flowchart of a software routine run at the back-end server. The back-end server runs a back-end server command process for executing the command received from the front-end server. The software at the back-end server has the ATCP layer that sets up a 3-way ATCP connection (step 109) and wakes up the back-end server command process blocked while waiting for a command from the front-end server (step 110).

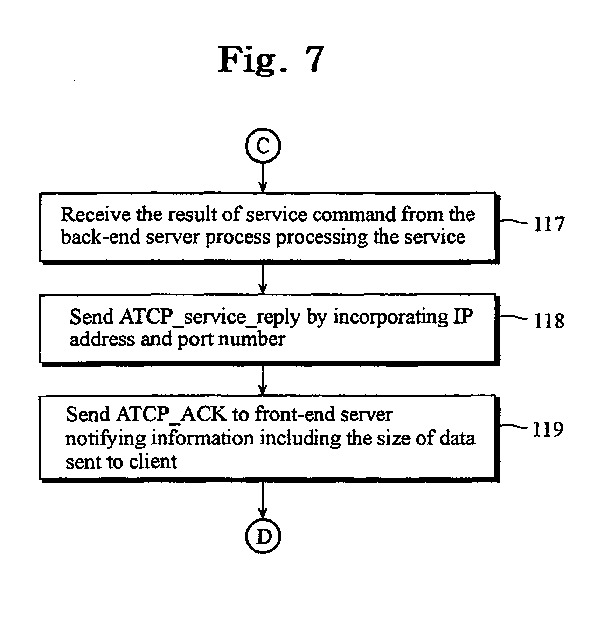

FIG. 7 is a flowchart of a software routine run at the back-end server before sending ATCP_service 26 to the client and ATCP_ACK 27 to the front-end server. When the result of the service command is received from the back-end server command process, it is sent to the client by incorporating the IP address and port number of the front-end server.

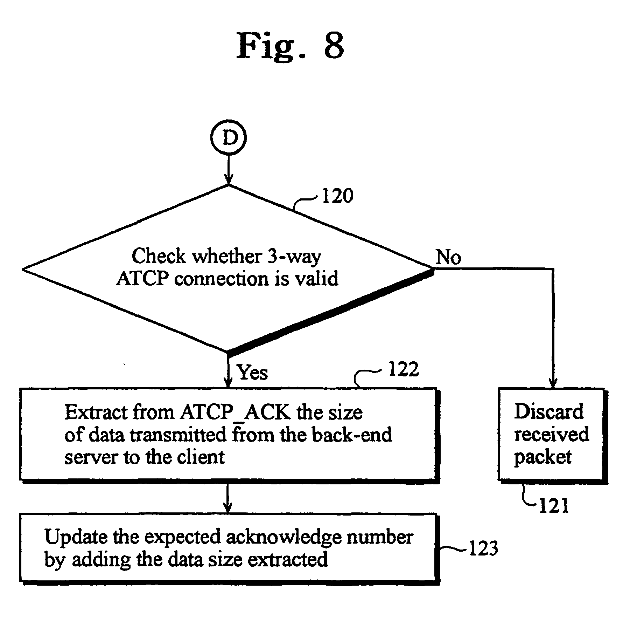

FIG. 8 is a flowchart of a software routine run at the front-end server upon receiving ATCP_ACK 27 from the back-end server at the time indicated by Point D. The front-end server checks whether the ATCP connection is valid (step 120). If not valid, the received packet is discarded (step 121). If valid, the front-end server extracts the size of data transmitted by the back-end server to the client (step 122) and updates the expected acknowledgement by adding the data size (step 123).

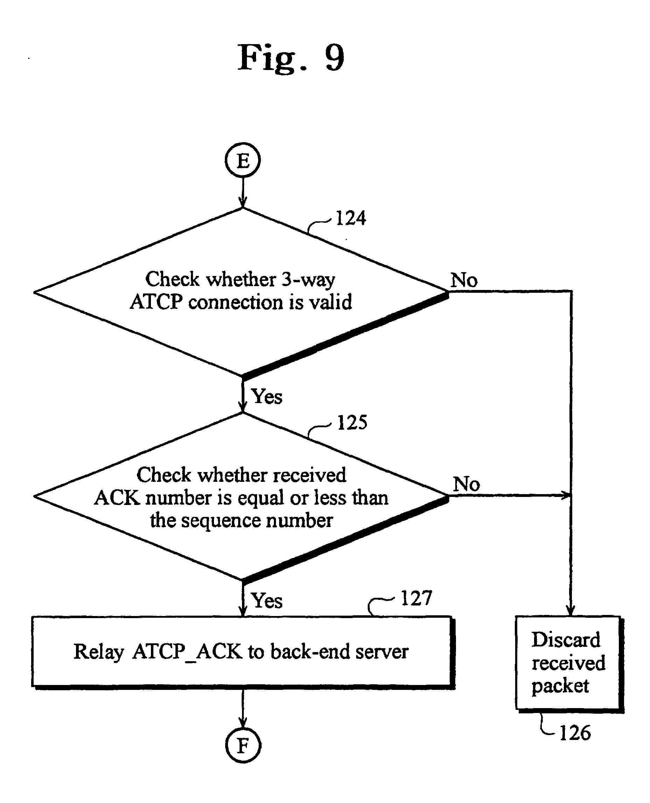

FIG. 9 is a flowchart of a software routine run at the front-end server upon receiving ACK 28 from the client at the time indicated by Point E. The front-end server checks whether the ATCP connection is valid (step 124). If not valid, the received packet is discarded (step 126). If valid, it is checked whether the received ACK number is equal or less than the sequence number (step 125). If the received ACK number is larger, the received packet is discarded (step 126). If the received ACK number is equal or less, the ATCP buffer is emptied by the received amount.

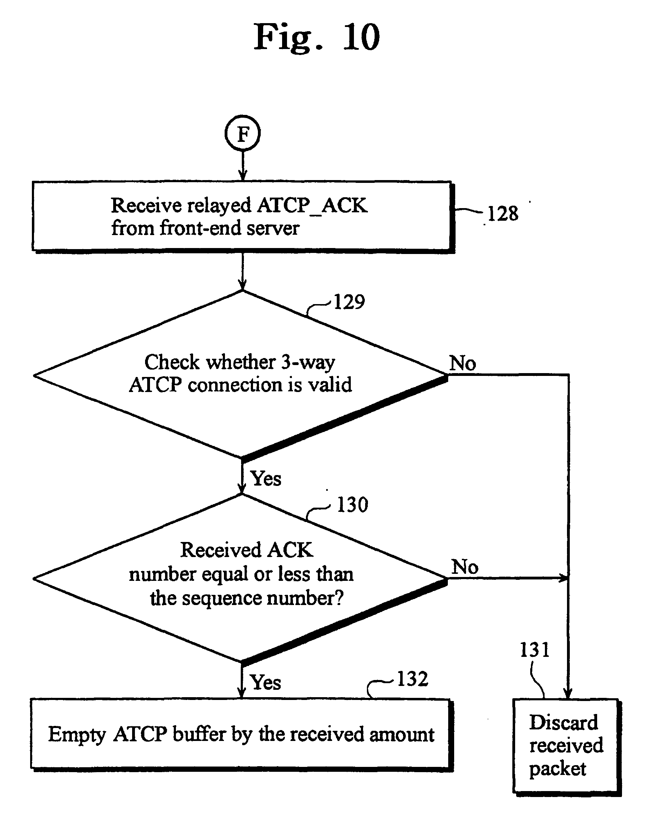

FIG. 10 is a flowchart of a software routine run at the back-end server at receiving ATCP_ACK 29 that was relayed by the front-end server receiving ACK 28 from the client. Point F in FIG. 10 corresponds to point F in FIG. 9, the time when the back-end server received ATCP_ACK 29 from the front-end server.

Receiving the ATCP_ACK packet from the front-end server (step 128), the back-end server checks whether the ATCP connection is valid (step 129). If not valid, the received packet is discarded (step 131). If valid, it is checked whether the received ACK number is equal or less than the sequence number (step 130). If the received ACK number is larger, the received packet is discarded (step 131). If the received ACK number is equal or less, the ATCP buffer is emptied by the received amount.

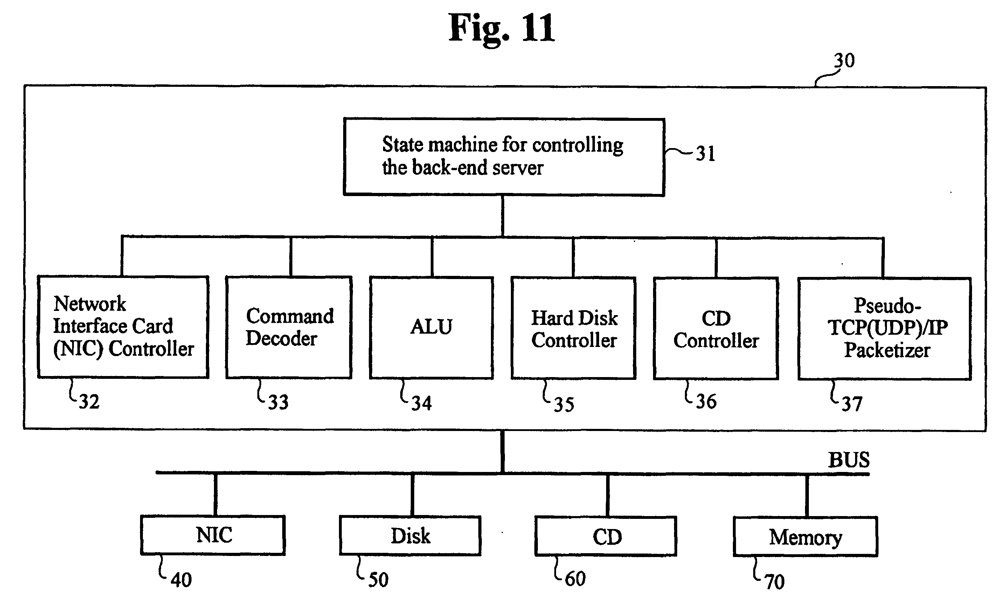

FIG. 11 shows the back-end server which comprises a back-end server controller 30, an NIC(network interface card) 40, a disk 50, a CD 60 and memory 70. The NIC functions as an interface between the back-end server and the network cabling.

The back-end server controller 30 is preferably a program controlling various controlling operations in the back-end server. The back-end server controller 30 further comprises a state machine 31 for controlling the back-end server, a NIC controller 32, a command decoder 33, an ALU 34, a disk controller 35, a CD controller 36, a pseudo TCP packetizer 37.

The NIC controller 32 is a program module for controlling receipt and transmission of packets from and to the network by reading and writing an NIC register. The command decoder 33 is a program module to decode the command from the front-end server included in the TCP packet received through the NIC. The ALU 34 performs arithmetic and logic operations necessary for performing a command. The disk controller 35 is a program module to control the input and output to and from the disk 50. The CD controller 36 is a program module to control the output from a CD from the CD 60. The pseudo TCP packetizer 37 assembles a pseudo TCP packet by making up the TCP header and the IP header to look like that the packet was sent by the front-end server.

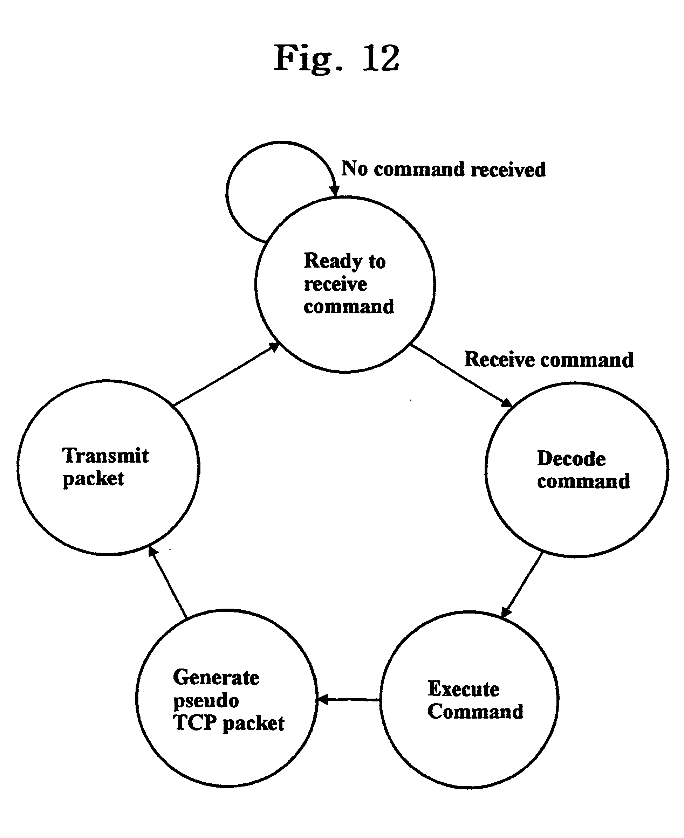

FIG. 12 is a state transition diagram of a state machine controlling the back-end server of the present invention. The back-end server is ready to receive a command from the front-end server through the NIC. When a command is received, the received command is decoded by the command decoder 33 to execute the command or to perform I/O. The result is incorporated by a pseudo TCP packetizer 37 into a pseudo TCIP/IP packet that looks like a packet sent by the front-end server. The above process is repeated.

The asymmetric 3-way TCP (ATCP) scheme of the present invention realizes an economic and scalable server system where the server distributes a client request to one or more back-end servers which perform the work and deliver the result to the client.

The ATCP scheme of the present invention can increase the performance of a web server by replacing the existing TCP layer with the ATCP layer so as to distribute the work among multiple back-end servers. For example, the existing web servers may be modified in such a way that the web servers that received the requests from clients may instructs the multiple back-end servers to perform the work and relate the work to the clients.

The presence of back-end servers is transparent to the client in that there is no need for a client to have any prior knowledge of back-end servers and there is no need to change the IP or the port address of the existing servers. Only the front-end server needs to have prior knowledge of the back-end servers.

Although the prevent invention was described in terms of a preferred embodiment using the TCP, an alternative embodiment is possible using the UDP (User Datagram Protocol), another transport-layer protocol offered as part of the TCP/IP suite. Whereas the TCP provides a connection-oriented service where a connection is established first before packets are sent in a continuous stream, the UDP provides a connectionless service where individual datagrams are sent without first establishing a connection. The UDP is typically used where guaranteed delivery is not critical, such as video or audio transmission.

In the alternative embodiment, similar to the pseudo TCP packet, the front-end servers sends to the back-end server the UDP header information (the front-end server's UDP port number and the client's UDP port number) and the IP header information (the front-end server's IP address and the client's IP address). The back-end server then assembles a pseudo UDP/IP packet using the information received.

While the invention has been described with reference to preferred embodiments, it is not intended to be limited to those embodiments. It will be appreciated by those of ordinary skilled in the art that many modifications can be made to the structure and form of the described embodiments without departing from the scope of this invention.

For example, the preferred embodiment of the present invention was described with respect to a web server, but those skilled in the art will appreciate that the same technique can be applied to other kinds of servers such as a DB server, a file server, a mail server, a firewall server and a printer server.

## Claims

1. A server system for processing a service request from a client in a network processing environment, comprising:
a client issuing a service request;
a front-end server for receiving the service request from the client and for generating a service command necessary to perform the service request; and
at least one back-end server for executing the service command received from the front-end server and for sending a result of the service command to the client bypassing the front-end server, wherein the result is in a pseudo packet that would be recognized by the client as a packet originating from the front-end server.

2. The system of claim 1, wherein said pseudo packet contains an IP address and a port number corresponding to the front-end server.

3. The system of claim 2, wherein said pseudo packet is a pseudo TCP packet containing a TCP header.

4. The system of claim 2, wherein said pseudo packet is a pseudo UDP packet containing a UDP header.

5. The system of claim 1, wherein the front-end server is a DB server.

6. The system of claim 1, wherein the front-end server is a file server.

7. The system of claim 1, wherein the front-end server is a mail server.

8. The system of claim 1, wherein the front-end server is a printer server.

9. The system of claim 1, wherein the front-end server is a firewall server.

10. The system of claim 1, wherein the back-end server further comprises:
a state machine for controlling packet generation and transmission;
a command decoder for decoding a command received from the front-end server,
a pseudo packetizer for assembling said pseudo packet[s] ;
network interface card (NIC) controller for controlling an NIC;
a disk controller for controlling a disk;
a CD controller for controlling an output from a CD; and
a memory controller for controlling a memory.

11. The system of claim 3, wherein the pseudo TCP packet further comprises an IP header and said at least one back-end server sends the pseudo TCP packet to the client without modifying the port number, which is expected by the client.

12. The system of claim 4, wherein the pseudo UDP packet further comprises an IP header.

13. A method for processing a service request from a client in a network processing environment, comprising the steps of:
receiving a service request from the client by a front-end server;
generating a command necessary for a back-end server to perform the service request;
executing the command by the back-end server;
assembling, by the back-end server, a pseudo packet bearing a result of the command, such that the pseudo packet would look like a packet originating from the front-end server; and
sending the pseudo packet from the back-end server directly to the client bypassing the front-end-server.

14. The system of claim 13, wherein said pseudo packet is a pseudo TCP packet containing a TCP header.

15. The system of claim 13, wherein said pseudo packet is a pseudo UDP packet containing a UDP header.

16. A computer-readable medium containing a computer program which can be run in a computer to perform the steps of:
receiving a service request from a client;
generating a command necessary for a back-end server to perform the service request;
executing the command by the back-end server,
assembling, by the back-end server, a pseudo packet bearing a result of the command, such that the pseudo packet would like a packet originating from the front-end server, and
sending the pseudo packet from the back-end server directly to the client bypassing the front-end server.

17. The computer-readable medium of claim 16, wherein said pseudo packet is a pseudo TCP packet containing a TCP header.

18. The computer-readable medium of claim 16, wherein said pseudo packet is a pseudo UDP packet containing a UDP header.

19. The computer-readable medium of Claim 16, wherein the medium is a CD.

## Patentansprüche

1. Serversystem zur Verarbeitung einer Dienstanfrage eines Clients in einer Netzwerkverarbeitungsumgebung, mit:
- einem Client, welcher eine Dienstanfrage absendet;
- einem Front-End-Server zum Empfang der Dienstanfrage von dem Client und zur Erzeugung eines für die Durchführung der Dienstanfrage notwendigen Dienstbefehls; und
- wenigstens einem Back-End-Server zur Ausführung des von dem Front-End-Server erhaltenen Dienstbefehls und zum Senden eines Ergebnisses des Dienstbefehls an den Client, wobei der Front-End-Server umgangen wird und wobei das Ergebnis ein Pseudopaket ist, welches von dem Client als von dem Front-End-Server stammendem Paket anerkannt wird.

2. System nach Anspruch 1,
**dadurch gekennzeichnet, dass**
das Pseudopaket eine IP-Adresse und eine Port-Nummer, welche mit dem Front-End-Server korrespondieren, aufweist.

3. System nach Anspruch 2,
**dadurch gekennzeichnet, dass**
das Pseudopaket als Pseudo-TCP-Paket ausgebildet ist, welches einen TCP-Header aufweist.

4. System nach Anspruch 2,
**dadurch gekennzeichnet, dass**
das Pseudopaket als Pseudo-UDP-Paket ausgebildet ist, welches einen UDP-Header aufweist.

5. System nach Anspruch 1,
**dadurch gekennzeichnet, dass**
der Front-End-Server als DB-Server ausgebildet ist.

6. System nach Anspruch 1,
**dadurch gekennzeichnet dass**
der Front-End-Server als Dateiserver ausgebildet ist.

7. System nach Anspruch 1,
**dadurch gekennzeichnet, dass**
der Front-End-Server als Mail-Server ausgebildet ist.

8. System nach Anspruch 1,
**dadurch gekennzeichnet, dass**
der Front-End-Server als Druckerserver ausgebildet ist.

9. System nach Anspruch 1,
**dadurch gekennzeichnet, dass**
der Front-End-Server als Firewall-Server ausgebildet ist.

10. System nach Anspruch 1,
**dadurch gekennzeichnet, dass**
der Back-End-Server des weiteren aufweist:
- eine Statusmaschine zur Steuerung der Paketerzeugung und -übertragung;
- einen Befehlsdecoder zur Dekodierung eines Befehls, welcher von dem Front-End-Server empfangen wurde;
- einen Pseudopaketpacker zur Zusammenstellung des Pseudopakets bzw. der Pseudopakete;
- einen Netzwerkschnittstellenkarten-(NIC) - Controller zur Steuerung einer NIC;
- einen Plattencontroller zur Steuerung einer Platte;
- einen CD-Controller zur Steuerung einer Ausgabe einer CD; und
- einen Speichercontroller zur Steuerung eines Speichers.

11. System nach Anspruch 3,
**dadurch gekennzeichnet, dass**
das Pseudo-TCP-Paket des weiteren einen IP-Header aufweist, und dass der wenigstens eine Back-End-Server das Pseudo-TCP-Paket an den Client sendet, ohne die Port-Nummer zu verändern, welche von dem Client erwartet wird.

12. System nach Anspruch 4,
**dadurch gekennzeichnet, dass**
das Pseudo-UDP-Paket des weiteren einen IP-Header aufweist.

13. Verfahren zur Verarbeitung einer Dienstanfrage eines Clients in einer Netzwerkverarbeitungsumgebung, welches die folgenden Schritte aufweist:
- Empfangen einer Dienstanfrage von einem Client durch einen Front-End-Server;
- Erzeugen eines Befehls, welcher von einem Back-End-Server benötigt wird, um die Dienstanfrage auszuführen;
- Ausführen des Befehls durch den Back-End-Server;
- Zusammenstellen eines Pseudopakets durch den Back-End-Server, welches das Ergebnis des Befehls trägt, derart, dass das Pseudopaket wie ein von dem Front-End-Server stammendes Paket aussehen würde; und
- Senden des Pseudopakets von dem Back-End-Server direkt an den Client, wobei der Front-End-Server umgangen wird.

14. System nach Anspruch 13,
**dadurch gekennzeichnet, dass**
das Pseudopaket als Pseudo-TCP-Paket mit einem TCP-Header ausgebildet ist.

15. System nach Anspruch 13,
**dadurch gekennzeichnet, dass**
das Pseudopaket als Pseudo-UDP-Paket mit einem UDP-Header ausgebildet ist.

16. Computerlesbares Medium mit einem Computerprogramm, welches in einem Computer ausgeführt werden kann, um die nachfolgenden Schritte durchzuführen:
- Empfangen einer Dienstanfrage von einem Client;
- Erzeugen eines von einem Back-End-Server benötigten Befehls, um die Dienstanfrage zu verarbeiten;
- Ausführen des Befehls durch den Back-End-Server ;
- Zusammenstellen eines Pseudopakets durch den Back-End-Server, welches ein Ergebnis des Befehls trägt, derart, dass das Pseudopaket wie ein von dem Front-End-Server stammendes Paket aussehen würde; und
- Senden des Pseudopakets von dem Back-End-Server direkt an den Client, wobei der Front-End-Server umgangen wird.

17. Computerlesbares Medium nach Anspruch 16,
**dadurch gekennzeichnet, dass**
das Pseudopaket als Pseudo-TCP-Paket mit einem TCP-Header ausgebildet ist.

18. Computerlesbares Medium nach Anspruch 16,
**dadurch gekennzeichnet, dass**
das Pseudopaket als Pseudo-UDP-Paket mit einem UDP-Header ausgebildet ist.

19. Computerlesbares Medium nach Anspruch 16,
**dadurch gekennzeichnet, dass**
das Medium eine CD ist.

## Revendications

1. Système serveur pour traiter une demande de service d'un client dans un environnement de traitement en réseau, comprenant:
un client délivrant une demande de service;
un serveur frontal pour recevoir la demande de service du client et pour générer une commande de service nécessaire pour accomplir la demande de service; et
au moins un serveur de fond pour exécuter la commande de service reçue du serveur frontal et pour envoyer un résultat de la commande de service au client en dérivant le serveur frontal, dans lequel le résultat est dans un pseudo paquet qui devrait être reconnu par le client comme un paquet provenant du serveur frontal.

2. Système de la revendication 1, dans lequel ledit pseudo paquet contient une adresse IP et un numéro de port correspondant au serveur frontal.

3. Système de la revendication 2, dans lequel ledit pseudo paquet est un pseudo paquet TCP contenant un en-tête TCP.

4. Système de la revendication 2, dans lequel ledit pseudo paquet est un pseudo paquet UDP contenant un en-tête UDP.

5. Système de la revendication 1, dans lequel le serveur frontal est un serveur BD.

6. Système de la revendication 1, dans lequel le serveur frontal est un serveur de fichiers.

7. Système de la revendication 1, dans lequel le serveur frontal est un serveur de courrier.

8. Système de la revendication 1, dans lequel le serveur frontal est un serveur d'imprimante.

9. Système de la revendication 1, dans lequel le serveur frontal est un serveur de pare-feu.

10. Système de la revendication 1, dans lequel le serveur de fond comprend en outre:
une machine d'état pour commander la génération et la transmission du paquet;
un décodeur de commande pour décoder une commande reçue du serveur frontal;
un pseudo dispositif de mise en paquets pour assembler le(s)dit(s) pseudo paquet(s);
un contrôleur de carte interface réseau (CIR) pour contrôler une CIR;
un contrôleur de disque pour contrôler un disque;
un contrôleur de CD pour contrôler une sortie d'un CD; et
un contrôleur de mémoire pour contrôler une mémoire.

11. Système de la revendication 3, dans lequel le pseudo paquet TCP comprend en outre un en-tête IP et ledit au moins un serveur de fond envoie le pseudo paquet TCP au client sans modifier le numéro de port, qui est attendu par le client.

12. Système de la revendication 4, dans lequel le pseudo paquet UDP comprend en outre un en-tête IP.

13. Procédé pour traiter une demande de service d'un client dans un environnement de traitement en réseau, comprenant les étapes de:
réception d'une demande de service du client par un serveur frontal;
génération d'une commande nécessaire pour un serveur de fond pour accomplir la demande de service;
exécution de la commande par le serveur de fond;
assemblage, par le serveur de fond, d'un pseudo paquet portant un résultat de la commande, tel que le pseudo paquet ressemble à un paquet provenant du serveur frontal; et
envoi du pseudo paquet, du serveur de fond directement au client, en dérivant le serveur frontal.

14. Système de la revendication 13, dans lequel le pseudo paquet est un pseudo paquet TCP contenant un en-tête TCP.

15. Système de la revendication 3, dans lequel le pseudo paquet est un pseudo paquet UDP contenant un en-tête UDP.

16. Support lisible par ordinateur contenant un programme d'ordinateur qui peut tourner sur un ordinateur pour accomplir les étapes de:
réception d'une demande de service d'un client;
génération d'une commande nécessaire pour un serveur de fond pour accomplir la demande de service;
exécution de la commande par le serveur de fond;
assemblage, par le serveur de fond, d'un pseudo paquet portant un résultat de la commande, tel que le pseudo paquet ressemble à un paquet provenant du serveur frontal; et
envoi du pseudo paquet, du serveur de fond directement au client, en dérivant le serveur frontal.

17. Support lisible par ordinateur de la revendication 16, dans lequel ledit pseudo paquet est un pseudo paquet TCP contenant un en-tête TCP.

18. Support lisible par ordinateur de la revendication 16, dans lequel ledit pseudo paquet est un pseudo paquet UDP contenant un en-tête UDP.

19. Support lisible par ordinateur de la revendication 16, dans lequel le support est un CD.
